# DEMANDE DE BREVET EUROPEEN

(11) **EP 4 516 090 A1**
(43) Date de publication de la demande: **05.03.2025**
(21) Numéro de dépôt: 24197518.4
(22) Date de dépôt: 30.08.2024
(51) Int. Cl.: A01G 17/02, A01B 39/16, A01B 51/00, A01B 59/043

(54) **DISPOSITIF DE SUPPORT D'OUTILS DE TRAVAIL DE SOL**

(30) Priorité: 30.08.2023 FR 2309105
(71) Demandeur: ELEVEN & CO, 16100 Merpins (FR)
(72) Inventeur: HUBERT, Patrick, 16370 CHERVES-RICHEMONTS (FR)
(74) Mandataire: Aquinov

(57) **Abrégé**

L'invention concerne un dispositif de support (1) d'outils de travail de sol et notamment de dessous de rang, comprenant un châssis(5) comprenant une base (6) comportant, d'une part, des moyens d'attache à l'arrière d'un véhicule automobile (2) avec une direction d'avancement (Y) et, d'autre part, des moyens de fixation à un outil inter rang (3), un manchon supérieur (7) et deux bras principaux (15) s'étendant du manchon supérieur (7) selon un plan P(X,Z) perpendiculaire à la direction (Y), chacun des bras principaux (15) comportant une poutre supérieure (16) apte à translater selon la direction (X) dans le manchon supérieur (7) et un mât vertical (17) comprenant des moyens de fixation à un outil de rang complet (4).

## Description

La présente invention concerne le domaine technique de dispositif de support d'outils de travail de sol et notamment de dessous de rang.

Dans le domaine de la viticulture, une grande difficulté est l'entretien du dessous du rang de vigne, à savoir entre les ceps. Il existe des solutions de désherbage chimique qui présentent des dangers tels que l'appauvrissement de la microfaune du sol et la pollution des eaux et du sol.

Plusieurs solutions mécaniques existent également telles que le décavaillonnage avec l'utilisation d'un outil aratoire, la tonte, ou encore le passage d'un rotofile. Cependant de telles méthodes ont des vitesses de travail lentes.

Il est également connu de travailler le sol aux moyens d'un outil de travail dit de demi-rang qui permet de travailler le sol sur un demi-rang ou deux demi-rangs en vis-à-vis. Un tel outil de travail de demi-rang est tracté ou poussé par un véhicule automobile de type tracteur. Un tel outil de travail de demi-rang peut également être monté sur un bras robotique.

L'invention vise à proposer un dispositif de support pour des outils déjà existants permettant de travailler deux rangs complets voire deux rangs complets et deux demi-rangs supplémentaires selon les outils de rang ou demi-rang utilisés. D'une part, le dispositif de support permet l'utilisation d'un outil de travail de l'inter-rang, à savoir pour le travail de sol de deux demi-rangs en vis-à-vis ou d'un seul des demi-rangs, et, d'autre part, de deux outils de sol dits outils de rang complet pour le travail des deux demi-rangs extérieurs. Le dispositif de support selon l'invention permet ainsi le travail au sol sur deux rangs complets voire deux rangs complets et deux demi-rangs supplémentaires.

L'invention porte sur un dispositif de support d'outils de travail de sol et notamment de dessous de rang, comprenant un châssis comprenant une base comportant, d'une part, des moyens d'attache à l'arrière d'un véhicule automobile avec une direction d'avancement Y et, d'autre part, des moyens de fixation à un outil inter rang, un manchon supérieur et deux bras principaux s'étendant du manchon supérieur selon un plan P(X,Z) perpendiculaire à la direction Y, chacun des bras principaux comportant une poutre supérieure apte à translater selon la direction X dans le manchon supérieur et un mât vertical comprenant des moyens de fixation à un outil de rang complet.

Avantageusement, le dispositif de support selon l'invention permet d'utiliser des outils d'inter rang existants et le dispositif de support selon l'invention est adaptable à différentes dimensions de rang de vigne.

L'invention porte sur un dispositif de support d'outils de travail de sol et notamment de dessous de rang, comprenant un châssis comprenant une base comportant, d'une part, des moyens d'attache à l'arrière d'un véhicule automobile avec une direction d'avancement Y et, d'autre part, des moyens de fixation à un outil inter rang.

Selon l'invention, le châssis comprend également un manchon supérieur et deux bras principaux s'étendant du manchon supérieur selon un plan P(X,Z) perpendiculaire à la direction d'avancement Y, chacun des bras principaux comportant une poutre supérieure apte à translater selon la direction horizontale X dans le manchon supérieur et un mât vertical fixé perpendiculairement selon la direction verticale Z à la poutre supérieure et comprenant des moyens de fixation à un outil de rang complet, les mâts verticaux étant destinés à être placés de chaque côté extérieur des rangs.

Le véhicule automobile avance ainsi entre deux rangs et tracte directement derrière lui le dispositif de support selon l'invention. Le dispositif de support selon l'invention comprend des moyens de fixation à un outil inter rang destiné au travail du sol entre lesdits deux rangs et le dispositif de support selon l'invention comprend également des moyens de fixation à deux outils de rang complet, un outil de rang complet étant destiné au travail du sol du côté extérieur d'un desdits rangs. Ainsi, le dispositif de support selon l'invention permet le travail au sol entre les rangs mais également de chaque côté extérieur des deux rangs.

Pour ce faire, chacun des bras verticaux est apte à s'étendre de chaque côté extérieur des deux rangs entre lesquels circule le véhicule automobile destiné à tracter le dispositif de support selon l'invention pour placer les outils de rangs complet de chaque côté extérieur desdits rangs.

Selon une caractéristique de l'invention, l'une des poutres supérieures est apte à coulisser dans l'autre poutre supérieure. La mise en oeuvre de telles poutres supérieures permet de réduire l'encombrement du dispositif de support. Cette configuration permet également de concevoir des poutres supérieures qui ont une plus grande amplitude déploiement.

Selon une autre caractéristique de l'invention, chaque mât vertical comporte un bras vertical apte à translater dans un manchon vertical du mât vertical formant ainsi une coulisse verticale. Une telle coulisse verticale permet à la fois de réduire l'encombrement du dispositif de support en position de transport et de pouvoir s'adapter à la typologie du terrain en montant et descendant les outils inter rang en conséquence.

Selon une forme de réalisation de l'invention, le dispositif de support comprend deux vérins levage outil, un vérin levage outil étant fixé entre le bras vertical et le manchon vertical.

Selon une caractéristique de l'invention, le dispositif de support comprend deux vérins largeur de rang, chaque vérin largeur de rang étant fixé sur le manchon supérieur et la poutre supérieure respective.

Selon une forme de réalisation de l'invention, le manchon supérieur comprend un chariot apte à translater selon la direction X et les deux vérins largeur de rang sont fixés sur le chariot.

Selon une forme de réalisation de l'invention, le manchon supérieur comprend un chariot apte à translater selon la direction horizontale X et les deux vérins largeur de rang sont fixés sur le chariot.

La mise en oeuvre d'un chariot relié aux vérins largeur de rang permet un système de compensation de dérive du véhicule automobile. La position adéquate des outils de rang complet par rapport aux pieds de vigne est ainsi maintenue. Le matériel est ainsi préservé.

Selon une caractéristique de l'invention, le dispositif de support comprend en outre au moins deux vérins chariot, chaque vérin chariot étant fixé sur le manchon supérieur et de chaque côté du chariot.

Selon une autre caractéristique de l'invention, chaque poutre supérieure comprend une came réglette et un capteur de came permettant de s'adapter à une largeur de rang. La mise en oeuvre de came réglette permet de positionner plus facilement la largeur du de chaque côté du dispositif de support définie par le positionnement des mâts verticaux pour s'adapter à des largeurs de rang standard.

Selon une forme de réalisation de l'invention, le dispositif de support s comprend deux vérins basculant fixés sur la base et le manchon supérieur.

Un tel système de basculement permet de préserver le matériel en relevant la structure du dispositif de support et donc des outils d'inter rang et de rang complet lorsque qu'un outil rencontre un obstacle tel qu'un rocher par exemple.

Selon une caractéristique de l'invention, le dispositif de support comprend en outre un dispositif suivi de sols sur parallélogramme situé entre l'outil de rang complet et le bras vertical comprenant un capteur sur suivi de sols et une roue de terrage apte à translater selon la direction verticale Z. La mise en oeuvre d'un dispositif de suivi de sols sur parallélogramme permet de commander indépendamment la hauteur d'un outil de rang complet. Le mât vertical ne sert alors plus qu'à remonter l'outil de rang complet, par exemple au bout d'un rang. La fonction dédiée à ajuster la hauteur de l'outil de rang complet en fonction du terrain est ainsi assurée par le dispositif suivi de sols sur parallélogramme.

Selon une variante de réalisation de l'invention le dispositif de support comprend un vérin terrage fixé entre la roue de terrage et le dispositif suivi de sols sur parallélogramme.

Selon une forme de réalisation de l'invention, le dispositif de support comprend en outre un capteur de relevage apte à connaitre la position du dispositif de support par rapport au véhicule automobile.

L'utilisation combinée de capteurs de mouvement et de vérins et plus particulièrement de vérins hydrauliques facilite le mouvement de la structure du dispositif de support. Chaque élément du dispositif de support peut être actionné via une unité de commande.

Selon une forme de réalisation de l'invention, le dispositif de support comprend une unité de commande apte à récupérer les informations des capteurs et à commander chaque vérin.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig.1] est une vue en perspective d'un exemple de réalisation du dispositif de support d'outils monté à l'arrière d'un tracteur et muni d'outils de travail de sol,
[Fig.2] est une vue en perspective d'un exemple de réalisation du dispositif de support selon l'invention,
[Fig.3] est une vue à plat selon le plan (Y,Z) du dispositif de support de la figure 2 muni d'outils de rang complet,
[Fig.4] est une vue à plat selon le plan (Y,Z) du dispositif de support de la figure 2 muni d'outils de rang complet en position basculée,
[Fig.5] est une vue à plat selon le plan (X,Z) du dispositif de support de la figure 2 muni d'outils de rang complet,
[Fig.6] est un détail de la figure 1,
[Fig.7] est une vue en coupe selon le plan (X,Z) d'un détail de la figure 2,
[Fig.8] est une vue d'un détail de la figure 5,
[Fig.9] est une vue d'un détail de la figure 5,
[Fig.10] est une vue à plat selon le plan (X,Z) du dispositif de support de la figure 2 muni d'outils de rang complet en position relevée,
[Fig.11] est une vue à plat selon le plan (X,Z) du dispositif de support de la figure 2 muni d'outils de rang complet en position descendue,
[Fig.12] est une vue d'un exemple de réalisation des poutres transverses d'un dispositif de support selon l'invention,
[Fig.13] est une vue d'un exemple de réalisation d'un chariot du dispositif de support selon l'invention,
[Fig.14] est une vue en perspective d'un détail d'un exemple de réalisation d'un dispositif de support selon l'invention, et
[Fig.15] est une vue en éclatée de la figure 14.

Il est à noter que sur ces figures les éléments structurels et/ou fonctionnels communs aux différentes variantes peuvent présenter les mêmes références. Le repère orthogonal (X,Y,Z) est utilisé pour chaque figures et la description.

La direction d'avancement Y correspond à la direction d'avancement du véhicule automobile destiné à tracter le dispositif de support selon l'invention. Le plan P(X,Z) est perpendiculaire à la direction d'avancement Y avec la direction horizontale X et la direction verticale Z utilisées usuellement.

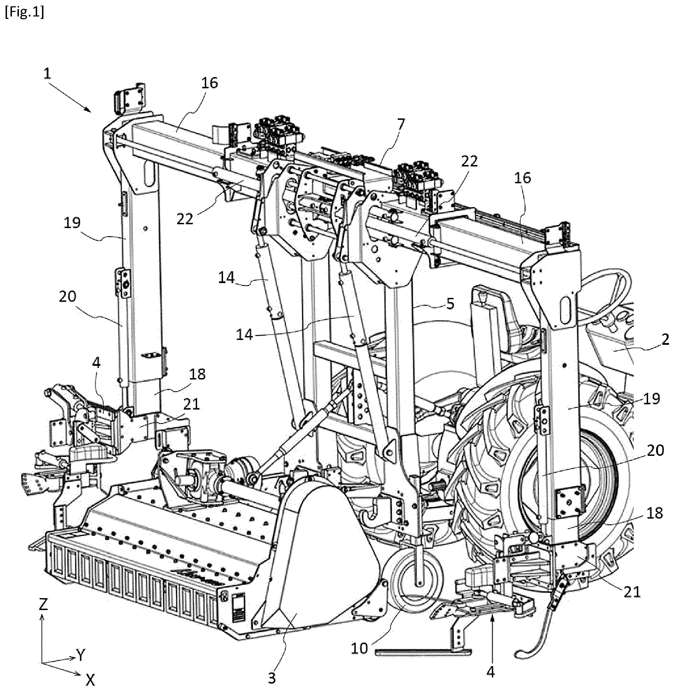

L'invention vise à faciliter le travail du sol dans le domaine de la viticulture. L'invention propose un dispositif de support désigné dans son ensemble par la référence 1 tel qu'illustré à la figure 1 formant un portique permettant l'utilisation de plusieurs outils de travail de sol.

La figure 1 illustre le dispositif de support 1 selon l'invention fixé à l'arrière d'un véhicule automobile 2 de type tracteur et sur lequel sont montés un outil inter rang 3 situé en arrière du dispositif entre deux demi-rangs centraux en vis-à-vis et deux outils de rang complet 4 destinés à travailler le sol du côté extérieur de chaque demi-rang. Deux rangs complets sont ainsi travaillés simultanément pour cet exemple d'utilisation du dispositif de support 1 selon l'invention.

Un outil inter rang 3 compatible avec l'invention est à destination d'un seul demi-rang droite ou gauche ou encore de deux demi-rangs en vis-à-vis. Un tel outil inter rang 3 peut comprendre une tondeuse, un broyeur ou encore un intercep. D'autres types d'outils inter rang 3 sont compatibles avec l'invention.

Un outil de rang complet 4 compatible avec l'invention est à destination d'un seul demi-rang extérieur ou encore de deux demi-rangs en vis-à-vis situés à l'extérieur de chaque rang. Un tel outil de rang complet 4 peut comprendre une tondeuse, un broyeur ou encore un intercep. D'autres types d'outils de rang complet 4 sont compatibles avec l'invention.

De tels outil inter rang 3 et outils de rang complet 4 existent avantageusement dans le commerce.

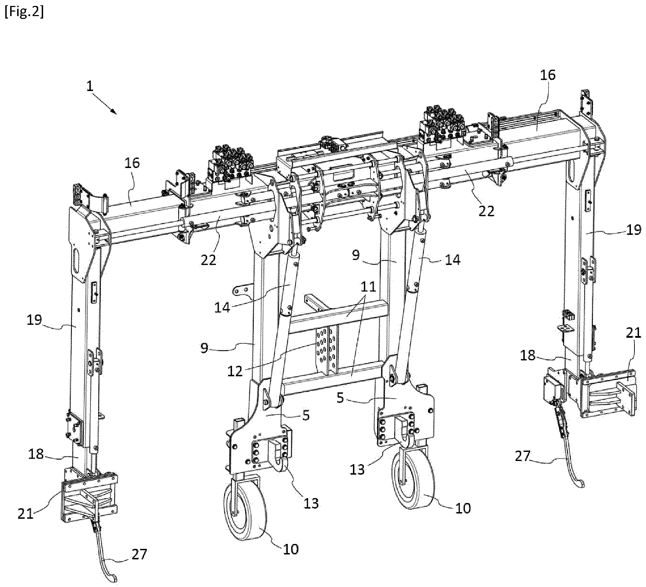

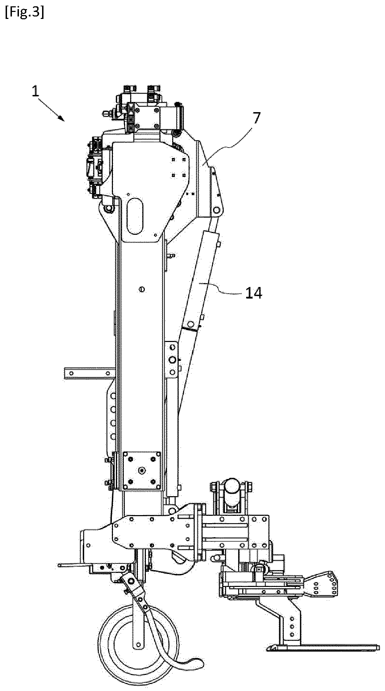

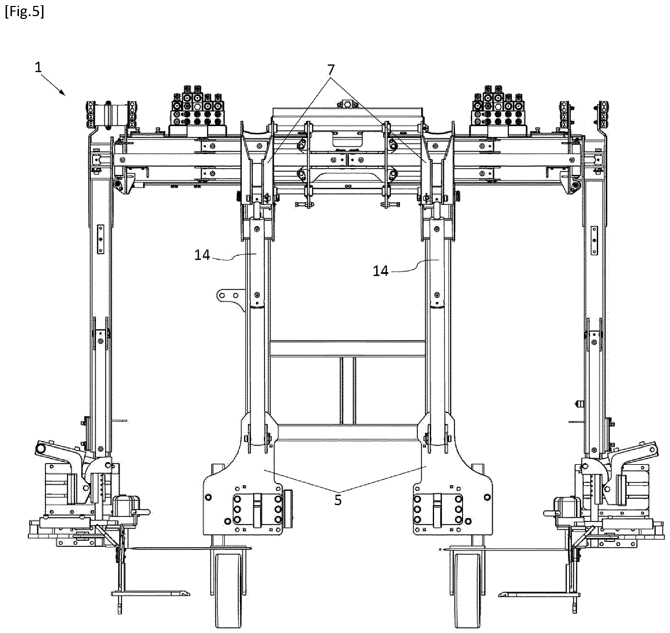

Le dispositif de support 1 illustré seul aux figures 2 à 5 comprend à ses fins un châssis 5 formé par un assemblage de pièces formant une structure. Le châssis 5 comporte ainsi une base et un manchon supérieur 7. Le manchon supérieur 7 est monté en pivot par rapport à la base au moyen d'une poutre pivot 8.

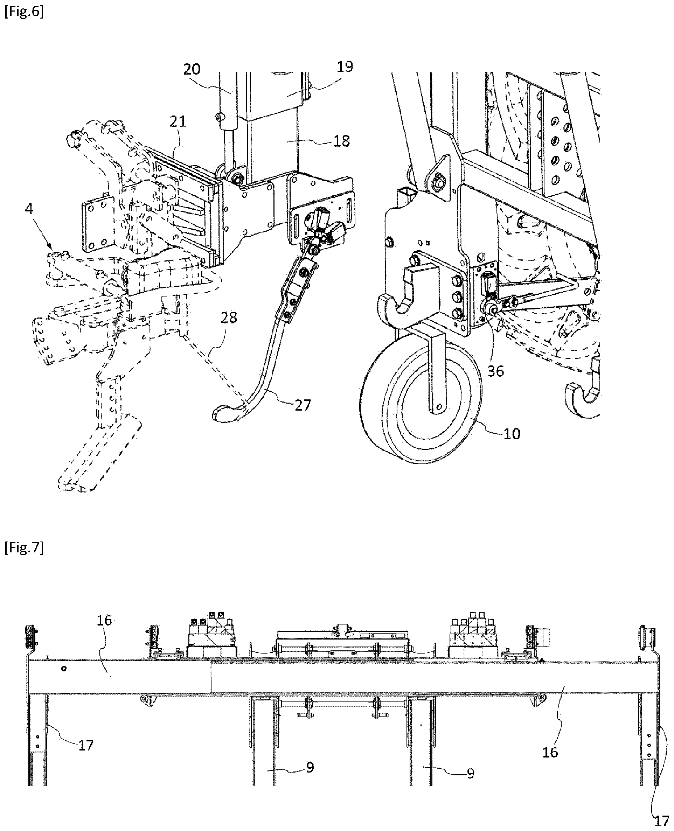

Selon la forme de réalisation illustrée, le châssis 5 comporte deux poutres centrales 9 reposant chacun sur une roue amovible 10 et deux poutres transverse 11. Des platines de fixation 12 visibles notamment à la figure 2 sont situées sur les poutres centrales 9 et les poutres transverses 11 de manière à pouvoir, d'une part, fixer le relevage trois points à l'arrière du véhicule automobile 2 de type tracteur, et d'autre part, fixer l'outil inter rang 3. L'outil inter rang 3 est également fixé au châssis 5 au moyen de deux mains d'attelage 13 visibles notamment à la figure 6. D'autres formes de réalisation de moyens d'attache du dispositif de support 1 à l'arrière d'un véhicule automobile 2 sont compatibles avec l'invention de même en fonction de l'outil inter rang 3 utilisé.

Le véhicule automobile 2 a une direction d'avancement Y horizontale sensiblement parallèle au sol. Le dispositif de support 1 s'étend selon un plan P (X,Z) sensiblement orthogonal à la direction d'avancement Y.

Deux vérins basculant 14 relient la base au manchon supérieur 7.

Afin de réaliser le dispositif de support 1 sous la forme d'un portique support d'outils, deux bras principaux s'étendent du manchon supérieur 7 selon la direction horizontale X.

Visibles sur les figures 7 à 9, chaque bras principal comprend une poutre supérieure 16 apte à coulisser dans le manchon supérieur 7.

Selon la forme de réalisation illustrée notamment à la figure 7, une des poutres supérieure 16 est également apte à coulisser dans l'autre poutre supérieure 16.

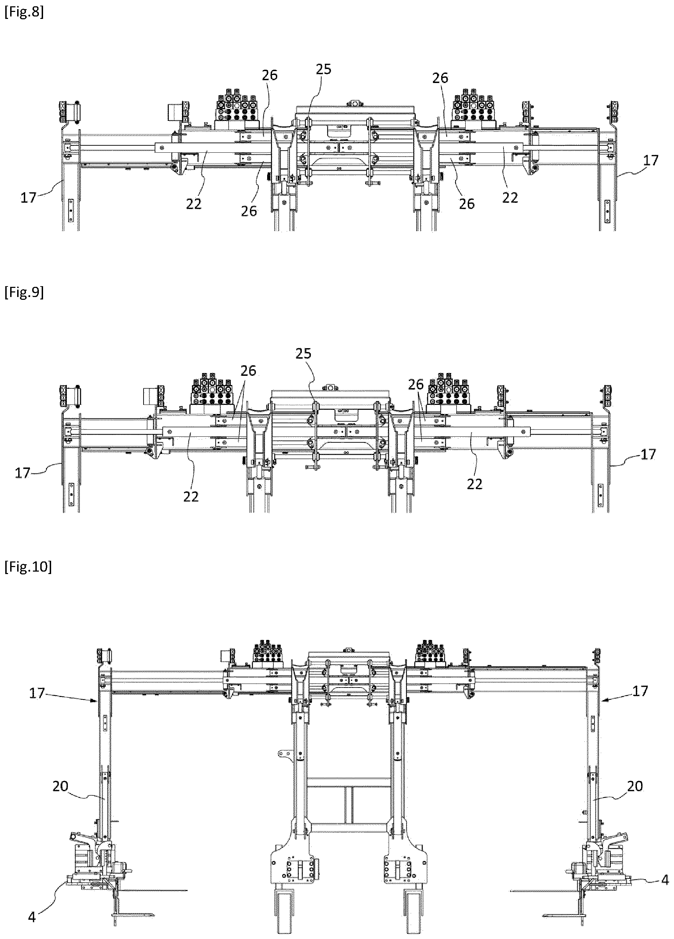

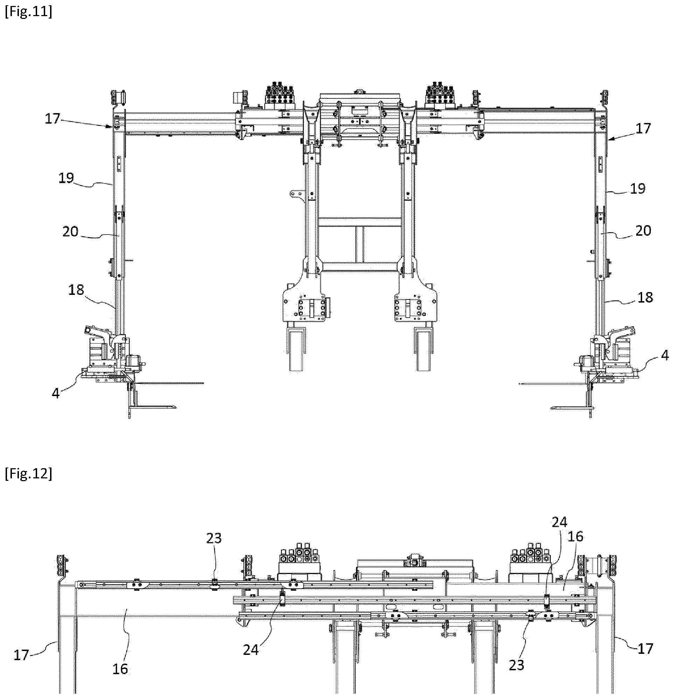

Visibles sur les figures 10 et 11, chaque bras principal comprend également un mât vertical 17 fixé perpendiculairement selon la direction verticale Z à une poutre supérieure 16.

Le mât vertical 17 comprend un bras vertical 18 apte à translater selon la direction verticale Z dans un manchon vertical 19 formant ainsi une coulisse verticale. Un vérin levage outil 20 est fixé entre le bras vertical 18 et le manchon vertical 19 respectif.

Le bras vertical 18 comprend également une structure de fixation outil 21, visible notamment à la figure 6, sur laquelle un outil de rang complet 4 est fixé.

Deux vérins largeur de rang 22 sont visibles aux figures 8 et 9. Un vérin largeur de rang 22 est fixé entre le manchon supérieur 7 et le mât vertical 17.

Selon une forme de réalisation illustrée à la figure 12, les poutres supérieures 16 comprennent une came réglette 23 et un capteur de came 24 permettant de placer les bras verticaux 18 selon des valeurs standards de largeur de rang.

Selon une forme de réalisation de l'invention, le manchon supérieur 7 comprend un chariot 25. Deux vérins chariot 26 sont fixés de chaque côté du chariot 25 et du manchon supérieur 7. Le chariot 25 est ains apte à translater selon la direction horizontale X.

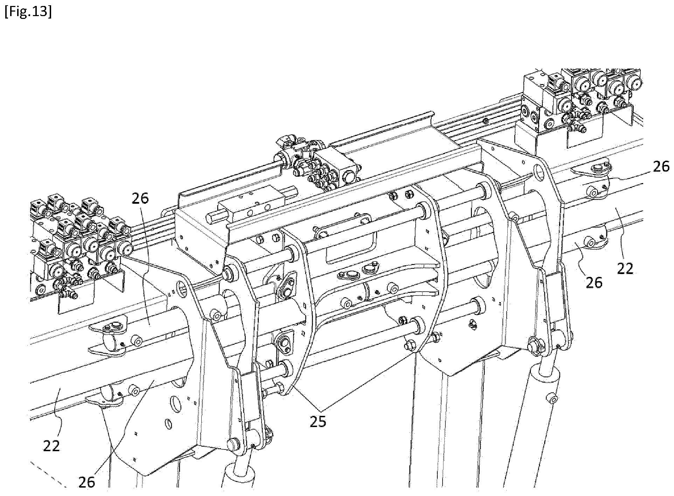

Dans cette forme particulière de réalisation visible à la figure 13, les deux vérins largeur de rang 22 se rejoignent et sont fixés sur le chariot 25.

Selon une forme de réalisation du dispositif de support 1 selon l'invention, les mats verticaux 17 sont munis d'un palpeur au sol 27 visible notamment à la figure 6 permettant de connaître la position de l'outil de rang complet 4 par rapport au sol. Selon la forme de réalisation illustrée aux figures 1 à 13, un tel palpeur au sol 27 est monté sur la structure de fixation outil 21.

Un outil de rang complet 4 compatible avec l'invention et illustré en pointillés à la figure 6 comprend un capteur sur décavaillonneuse 28 et un parallélogramme déformable permettant ainsi à l'outil de rang complet 4 de contourner le pied ou cep.

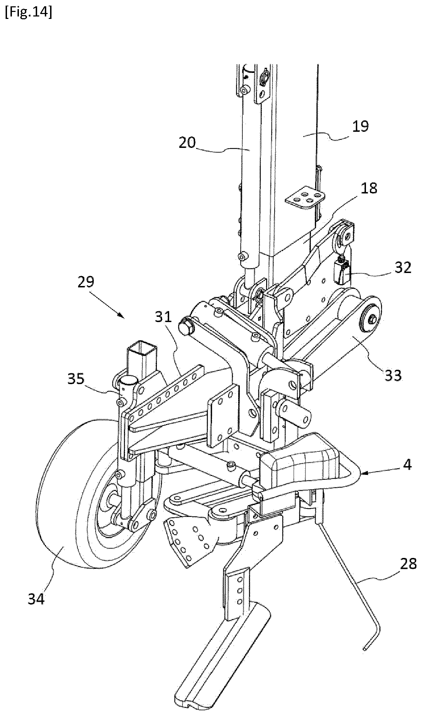

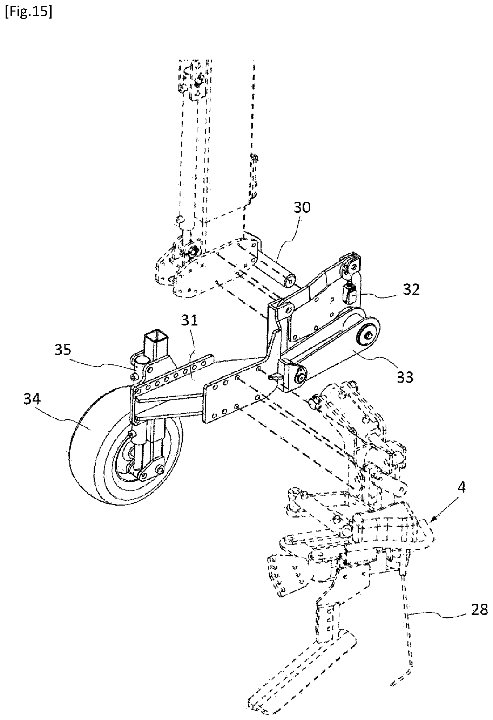

Les figures 14 et 15 illustrent une variante de réalisation pour l'interface entre le bras vertical 18 et un outil de rang complet 4.

Selon une forme de réalisation illustrée aux figures 14 et 15, un dispositif suivi de sols sur parallélogramme 29 est placé entre le bras vertical 18 et l'outil de rang complet 4 au niveau d'un point d'encrage du suivi de sol parallélogramme 30.

Le dispositif suivi de sols sur parallélogramme 29 comporte un bâti de terrage 31 comprend un capteur sur suivi de sols 32, un suivi de sols sur parallélogramme 33 et une roue de terrage 34 munie d'un vérin terrage 35 reliant la roue de terrage 34 au bâti terrage 31. Le dispositif suivi de sols sur parallélogramme 29 est ainsi apte à translater selon la direction verticale Z.

Selon une forme de réalisation de l'invention notamment visible à la figure 6, le dispositif de support 1 comprend également un capteur de relevage 36 situé au niveau d'une roue amovible 10 à proximité d'un des points de relevage du véhicule automobile 2 de type tracteur. Le capteur de relevage 36 est apte à récupérer l'information relative à la position du dispositif de support 1 par rapport au véhicule automobile 2 de type tracteur. En effet, selon une forme de réalisation de l'invention, le dispositif de support 1 est monté sur le relevage trois points à l'arrière d'un tracteur.

Un dispositif de support 1 selon l'invention est fixé à l'arrière d'un véhicule automobile 2 de type tracteur au niveau de trois points de relevage, ce qui permet de relever le dispositif de support 1 pour une position de transport ou, à la sortie du rang de vigne, pour effectuer la manoeuvre de repositionnement pour entrer dans un nouveau rang.

Le véhicule automobile 2 a une direction d'avancement Y entre les rangs d'une vigne. Les vérins largeur de rang 22 sont alors activés de manière à placer les mâts verticaux 17 de chaque côté extérieur des rangs de vigne. La figure 12 montre une poutre supérieure 16 déployée. Le véhicule automobile 2 et le dispositif de support 1 peuvent ainsi avancer dans les rangs.

Les vérins levage outil 20 sont alors activés de manière à placer les outils de rang complet 4 au plus près des ceps tel que le montre les figures 10 et 11. Les outils de rang complet 4 ou l'outil de travail de dessous de rang 3 sont alors mis en marche.

Si le véhicule automobile 2 ne suit pas exactement une trajectoire rectiligne, l'information d'éloignement ou de rapprochement des ceps est récupérée par au moins un outil de rang complet 4. Un des parallélogrammes des outils de rang complet 4 se déforme et le capteur sur décavaillonneuse 28 émet une information de rapprochement du pied ou cep. Cette information peut être traitée par une unité de commande (non représentée) de manière à activer les vérins chariot 26. Le chariot 25 translate alors de manière relative à droite ou à gauche selon la direction horizontale X afin d'ajuster la position des mâts verticaux 17 comme le montre les figures 8 et 9.

Pour un dispositif de support tel qu'illustré aux figures 1 à 13 en fonctionnement, le palpeur au sol 27 permet d'obtenir l'information de hauteur du terrain en temps réel. Les vérins levage outil 20 sont alors actionnés en fonction de cette information de manière à monter ou descendre l'outil de rang complet 4 respectif.

En alternative, pour un dispositif de support 1 tel qu'illustré aux figures 14 et 15, le capteur sur suivi de sol 32 permet d'obtenir l'information relative de la position de l'outil de rang complet 4 par rapport au sol. Le vérin terrage 35 est activé pour adapter la hauteur adéquate du dispositif suivi de sols sur parallélogramme 29.

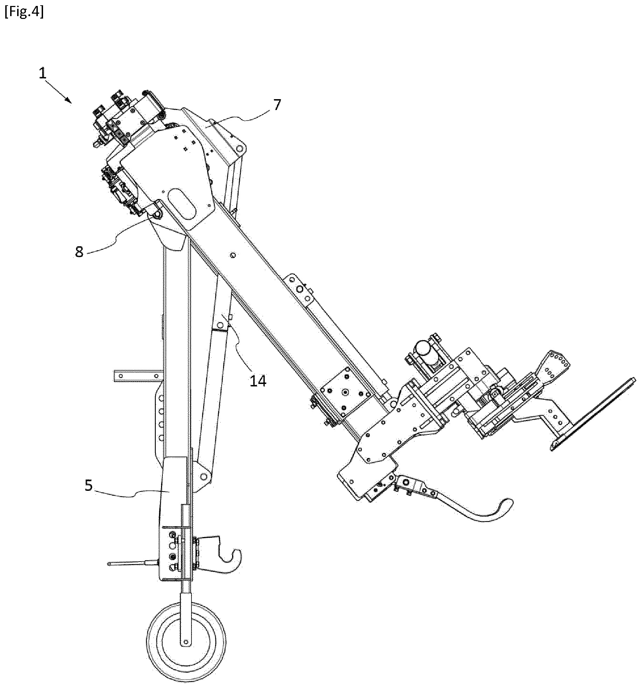

De plus, si un des outils de rang complet 4 rencontre un obstacle qui peut être dangereux pour le matériel, les deux vérins basculant 14 sont activés de manière à faire basculer le manchon supérieur 7 entrainant ainsi les poutres supérieurs 16, les mâts verticaux 17 et donc les outils de rang complet 4, tel que le montre la figure 4.

Lorsque le véhicule automobile 2 arrive à la fin d'une rangée, il relève alors le dispositif de support 1 aux moyens du relevage trois points. L'information est détectée par le capteur de relevage 36. L'unité de commande ordonne l'actionnement des vérins levage outil 20 afin de remonter également les outils de rang complet 4. Le véhicule automobile 2 peut alors exécuter un demi-tour afin de s'avancer dans une des rangées adjacentes avec la possibilité d'en sauter une.

Bien entendu, diverses autres modifications peuvent être apportées à l'invention dans le cadre des revendications annexées.

## Revendications

1. Dispositif de support (1) d'outils de travail de sol et notamment de dessous de rang, comprenant un châssis(5) comprenant une base (6) comportant, d'une part, des moyens d'attache à l'arrière d'un véhicule automobile (2) avec une direction d'avancement (Y) et, d'autre part, des moyens de fixation à un outil inter rang (3), un manchon supérieur (7) et deux bras principaux (15) s'étendant du manchon supérieur (7) selon un plan P(X,Z) perpendiculaire à la direction (Y), chacun des bras principaux (15) comportant une poutre supérieure (16) apte à translater selon la direction (X) dans le manchon supérieur (7) et un mât vertical (17) comprenant des moyens de fixation à un outil de rang complet (4).

2. Dispositif de support (1) selon la revendication précédente dans lequel l'une des poutres supérieures (16) est apte à coulisser dans l'autre poutre supérieure (16).

3. Dispositif de support (1) selon l'une des revendications précédentes dans lequel chaque mât vertical (17) comporte un bras vertical (18) apte à translater dans un manchon vertical (19) du mât vertical (17) formant ainsi une coulisse verticale.

4. Dispositif de support (1) selon la revendication précédente comprenant deux vérins levage outil (20), un vérin levage outil (20) étant fixé entre le bras vertical (18) et le manchon vertical (19).

5. Dispositif de support (1) selon l'une des revendications précédentes comprenant deux vérins largeur de rang (22), chaque vérin largeur de rang (22) étant fixé sur le manchon supérieur (7) et la poutre supérieure (16) respective.

6. Dispositif de support (1) selon l'une des revendications précédentes dans lequel le manchon supérieur (7) comprend un chariot (25) apte à translater selon la direction (X) et les deux vérins largeur de rang (22) sont fixés sur le chariot (25).

7. Dispositif de support (1) selon la revendication précédente comprenant en outre au moins deux vérins chariot (26), chaque vérin chariot (26) étant fixé sur le manchon supérieur (7) et de chaque côté du chariot (25).

8. Dispositif de support (1) selon l'une des revendications précédentes dans lequel chaque poutre supérieure (16) comprend une came réglette (23) et un capteur de came (24) permettant de s'adapter à une largeur de rang.

9. Dispositif de support (1) selon l'une des revendications précédentes comprenant deux vérins basculant (14) fixés sur la base et le manchon supérieur (7).

10. Dispositif de support (1) selon l'une des revendications précédentes comprenant en outre un dispositif suivi de sols sur parallélogramme (29) situé entre l'outil de rang complet (4) et le bras vertical (18) comprenant un capteur sur suivi de sols (32) et une roue de terrage (34) apte à translater selon la direction verticale (Z).

11. Dispositif de support (1) selon la revendication précédente comprenant un vérin terrage (35) fixé entre la roue de terrage (34) et le dispositif suivi de sols sur parallélogramme (29).

12. Dispositif de support (1) selon l'une des revendications précédentes comprenant en outre un capteur de relevage (36) apte à connaitre la position du dispositif de support (1) par rapport au véhicule automobile (2).

13. Dispositif de support (1) selon l'une des revendications précédentes comprenant une unité de commande apte à récupérer les informations d'au moins un capteur (24,28,32,36) et à commander au moins un vérin (14,20,22,26,35).
